# EUROPEAN PATENT SPECIFICATION

(11) **EP 4 237 358 B1**
(45) Date of publication and mention of the grant of the patent: **02.12.2026**
(21) Application number: 21885428.9
(22) Date of filing: 26.10.2021
(51) Int. Cl.: B07C 5/36, B25J 15/06, B25J 13/08, B25J 9/00, B25J 9/02, B25J 9/16, B65G 47/91

(54) **WASTE SORTING ROBOT AND METHOD FOR DETECTING FAULTS**
ABFALLSORTIERROBOTER UND VERFAHREN ZUR FEHLERERKENNUNG
ROBOT DE TRI DE DÉCHETS ET PROCÉDÉ DE DÉTECTION DE DÉFAILLANCES

(30) Priority: 28.10.2020 SE 2030325
(43) Date of publication of application: 06.09.2023
(73) Proprietor: MP ZenRobotics Oy, 01510 Vantaa, Helsinki (FI)
(72) Inventor: HOLOPAINEN, Harri, 02320 Espoo (FI)
(74) Representative: Invent Horizon IP
(86) International application number: PCT/FI2021/050720
(87) International publication number: WO 2022/090623

(56) References cited:
- WO-A1-2011/161304
- WO-A1-2012/052615
- WO-A1-2012/089928
- WO-A2-2008/102052
- WO-A2-2019/060489
- FR-A1- 3 093 330
- JP-B2- 5 196 156
- US-A1- 2018 036 774
- US-A1- 2019 361 672
- US-A1- 2019 389 082
- US-A1- 2020 290 214
- PAPADAKIS EMMANOUIL ET AL: "On the Use of Vacuum Technology for Applied Robotic Systems", 2020 6TH INTERNATIONAL CONFERENCE ON MECHATRONICS AND ROBOTICS ENGINEERING (ICMRE), IEEE, 12 February 2020 (2020-02-12), pages 73 - 77, XP033756482, DOI: 10.1109/ICMRE49073.2020.9065189
- KUMAR AJAY ET AL: "Journal of Physics: Conference Series PAPER @BULLET OPEN ACCESS Overview of Municipal Solid Waste Generation and Energy Utilization Potential in Major Cities of Indonesia Mapping of Municipal Solid Waste Transportation System, Case Studies Seberang Ulu Region Palembang City Development of a method o", JOURNAL OF PHYSICS CONFERENCE SERIES, 22 September 2019 (2019-09-22), pages 12127, XP055964075, Retrieved from the Internet <URL:https://iopscience.iop.org/article/10.1088/1742-6596/1359/1/012127/pdf> [retrieved on 20220923]

## Description

The present disclosure relates to a waste sorting robot for sorting waste objects and a method for detecting faults.

In the waste management industry, industrial and domestic waste is increasingly being sorted in order to recover and recycle useful components. Each type of waste, or "fraction" of waste can have a different use and value. If waste is not sorted, then it often ends up in landfill or incinerated which may have an undesirable environmental and economic impact.

It is known to sort industrial and domestic waste using a waste sorting robot. The waste sorting robot may pick objects with a suction gripper which uses negative pressure for sucking and gripping an object to be sorted. A problem with existing suction grippers is that the waste sorting robot is used in an environment with a significant amount of variability. For example, waste sorting environment has a significant amount of dust and debris and many waste objects to be sorted are different shapes and sizes.

This means that the information received from sensors may be used to generate an incorrect assessment in respect of waste sorting robot malfunctions e.g. false positives. This reduces the efficiency of the waste sorting robot because the waste sorting robot must be taken offline whilst unneeded maintenance and inspections are carried out.

WO 2019/060489 A2 discloses a robotic vacuum sorting system comprising a suction gripper mechanism mounted to a sorting robot, a vacuum system, robot control logic and electronics, and an imaging device. The system uses vacuum technology to grip and sort waste objects on a conveyor belt.

PAPADAKIS EMMANOUIL ET AL: "On the Use of Vacuum Technology for Applied Robotic Systems" presents a vacuum gripping system for a delta robot that sorts recyclable objects. The paper discusses the importance of vacuum generator technology, shock absorbers, and suction cup design for effective waste sorting applications.

KUMAR AJAY ET AL: "Journal of Physics: Conference Series PAPER, Overview of Municipal Solid Waste Generation and Energy Utilization Potential in Major Cities of Indonesia" describes a method for detecting and classifying waste objects on a conveyor for a robotic sorting system using neural network image processing.

FR 3 093 330 A1 describes a process for controlling suction grippers on robots, involving vacuum level monitoring and analysis. The document discloses detecting faults by analyzing temporal information from vacuum signal measurements, particularly using pressure indications to identify malfunctions.

US 2020/290214 A1 discloses a system where pressure measurements are used as indicators of suction cup malfunctions in robotic applications.

The invention is defined by the computer-implemented method of claim 1, the computer program product of claim 14, and the apparatus of claim 15. Optional aspects of the invention are provided by the dependent claims.

Various other aspects and further examples are also described in the following detailed description and in the attached claims with reference to the accompanying drawings, in which:
Figure 1 shows a perspective view of a waste sorting robot;
Figure 2 shows a schematic front view of a waste sorting robot;
Figure 3 shows a perspective view of a suction gripper;
Figure 4 shows a cross-sectional view of a suction gripper;
Figures 5a, 5b, 5c, 6a, 6b, 6c, 7a, 7b, 7c, 8a, 8b, 8c, 9a, 9b, and 9c show graphs of different parameters of the waste sorting robot in different operational scenarios;
Figure 10 shows a flow diagram for operation of a waste sorting robot; and
Figure 11 shows a table of different parameters of the waste sorting robot in different operational scenarios.

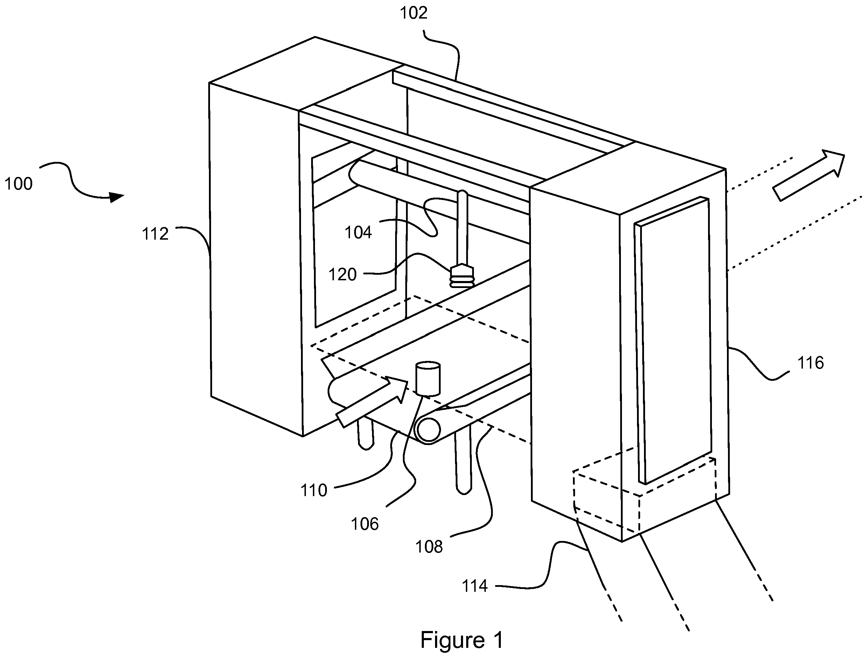

Figure 1 shows a perspective view of a waste sorting robot 100. **In** some examples, the waste sorting robot 100 can be a waste sorting gantry robot 100. **In** other examples other types of waste sorting robots can be used. For the purposes of brevity, the examples will be described in reference to waste sorting gantry robots but the examples described below can be used with other types of robot such as robot arms or delta robots. **In** some other examples, the waste sorting robot 100 is a Selective Compliance Assembly Robot Arm (SCARA).

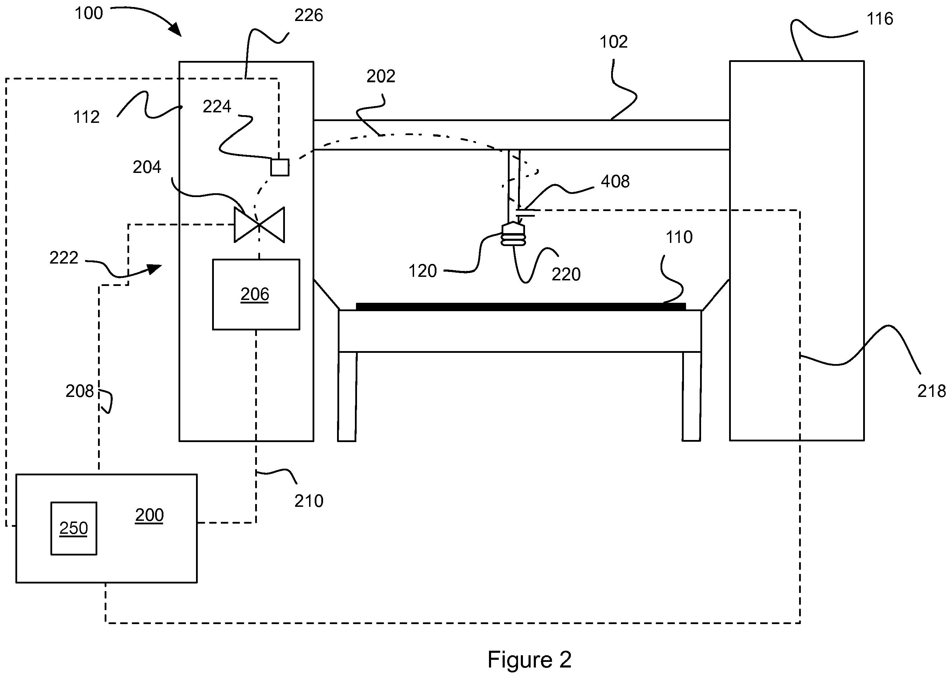

The waste sorting robot 100 comprises a controller 200 (schematically shown in Figure 2) for sending control and movement instructions to a manipulator 104 for interacting with a waste object 106 to be sorted. For the purposes of clarity, only one waste object 106 is shown in Figure 1 but there can be any number of waste objects 106 moving past the waste sorting robot 100. The controller 200 may be implemented on hardware, firmware or software operating on one or more processors or computers. A single processor can operate the different functionalities or separate individual processors, or separate groups of processors can operate each functionality.

The combination of the controller 200 sending control instructions to the manipulator 104 can also be referred to as a "robot". The controller 200 is located remote from the manipulator 104 and in some examples is housed in first and second cabinets 112, 116. **In** other examples, the controller 200 can be integral with the manipulator 104 and / or a gantry frame 102. **In** some examples, part of the gantry frame 102 is housed in the first and second cabinets 112, 116 for shielding one or more components of the waste sorting robot 100.

The manipulator 104 physically engages and moves the waste object 106 that enters a working area 108 in order to sort the waste object 106. The working area 108 of a manipulator 104 is an area within which the manipulator 104 is able to reach and interact with the waste object 106. The working area 108 as shown in Figure 1 is a cross hatched area beneath the manipulator 104.

The manipulator 104 is configured to move at variable heights above the working area 108. **In** this way, the manipulator 104 is configured to move within a working volume defined by the height above the working area 108 where the robot can manipulate the waste object 106. The manipulator 104 comprises one or more components for effecting relative movement with respect to the waste object 106. The manipulator 104 will now be described in further detail.

As shown in Figure 1, the manipulator 104 is configured to move within the working volume. The manipulator 104 comprises one or more servos, pneumatic actuators or any other type of mechanical actuator for moving the manipulator 104 in one or more axes. For the purposes of clarity, the servos, pneumatic actuators or mechanical actuators are not shown in Figure 1. Movement of the manipulator 104 is known and will not be discussed any further. A suction gripper 120 is coupled to the manipulator 104 and suction gripper 120 is discussed in further detail below.

The servos, pneumatic actuators or mechanical actuators are connectively connected to the controller 200 and the controller 200 is configured to issue instructions for actuating one or more of the servos, pneumatic actuators or mechanical actuators to move the manipulator 104 within the working area 108. Connections (not shown) between the servos, pneumatic actuators or mechanical actuators and the controller 200 can comprise one or more data and / or power connections. The control of servos, pneumatic actuators or mechanical actuators to move of the manipulator 104 is known and will not be discussed any further.

The waste object 106 is moved into the working area 108 by a conveyor belt 110. The path of travel of the conveyor belt 110 intersects with the working area 108. The direction of the conveyor belt 110 is shown in Figure 1 by two arrows. This means the waste object 106 moving on the conveyor belt 110 will pass through the working area 108. The conveyor belt 110 can be a continuous belt, or a conveyor belt formed from overlapping portions. The conveyor belt 110 can be a single belt or alternatively a plurality of adjacent moving belts (not shown).

In other examples, the waste object 106 can be conveyed into the working area 108 via other conveying means. The conveyor belt 110 can be any suitable means for moving the waste object 106 into the working area 108. For example, the waste object 106 are fed under gravity via a slide (not shown) to the working area 108.

The waste object 106 can be any type of industrial waste, commercial waste, domestic waste or any other waste which requires sorting and processing. Unsorted waste material comprises a plurality of fractions of different types of waste. Industrial waste can comprise fractions, for example, of metal, wood, plastic, hardcore and one or more other types of waste. In other examples, the waste can comprise any number of different fractions of waste formed from any type or parameter of waste. The fractions can be further subdivided into more refined categories. For example, metal can be separated into steel, iron, aluminium etc. Domestic waste also comprises different fractions of waste such as plastic, paper, cardboard, metal, glass and / or organic waste. A fraction is a category of waste that the waste can be sorted into by the waste sorting gantry robot 100. A fraction can be a standard or homogenous composition of material, such as aluminium, but alternatively a fraction can be a category of waste defined by a customer or user.

The waste sorting robot 100 is arranged to sort the waste object 106 into fractions according to one or more parameters of the waste object 106. The controller 200 receives information from the at least one sensor (not shown) corresponding to the waste object 106 on the conveyor belt 110. The at least one sensor is positioned in front of the manipulator 104 so that detected measurements of the waste object 106 are sent to the controller 200 before the waste object 106 enters the working area 108. In some examples, the at least one sensor can be any sensor suitable for determining a parameter of the waste object 106 e.g. one or more of a RGB camera, an infrared camera, a metal detector, a hall sensor, a temperature sensor, visual and / or infrared spectroscopic detector, 3D imaging sensor, terahertz imaging system, radioactivity sensor and / or a laser e.g. LIDAR. Additionally or alternatively, the at least one sensor is configured to detect the waste object 106 and send signals to the controller 200 when the waste object 106 enters or is in the working area 108.

The controller 200 determines instructions for moving the manipulator 104 based on the received information according to one or more criteria. Various information processing techniques can be adopted by the controller 200 for controlling the manipulator 104. Such information processing techniques are described in WO2012/089928, WO2012/052615, WO2011/161304, and WO2008/102052. Techniques for sorting the waste object 106 are known and will not be discussed any further.

Once the manipulator 104 has received instructions from the controller 200, the manipulator 104 executes the commands and moves the suction gripper 120 to pick the waste object 106 from the conveyor belt 110. The process of selecting and manipulating the waste object 106 on the conveyor belt 110 is known as a "pick". Once a pick has been completed, the manipulator 104 drops or throws the waste object 106 into a chute 114 adjacent to the conveyor belt 110.

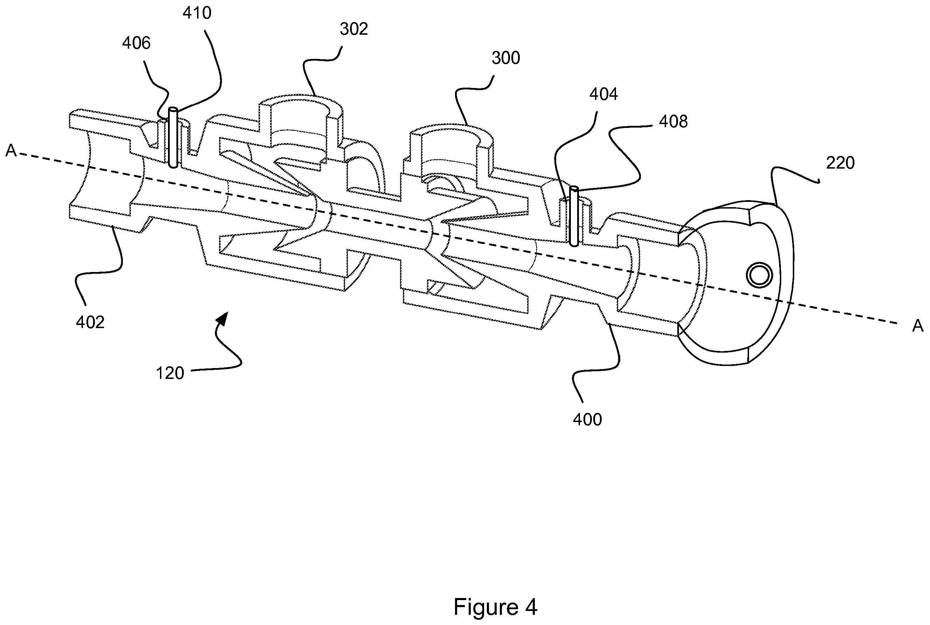

A waste object 106 dropped into the chute 114 is considered to be a successful pick. In order to achieve a successful pick, the waste sorting robot 100 must also perform a successful gripping operation. A successful gripping operation is an operation performed by the suction gripper 120 whereby by the waste object 106 is gripped and then moved to the intended destination e.g. the chute 114. In some other examples, the intended destination can be another conveyor belt (not shown), a pile of other waste objects (not shown), a bin or any other location for receiving sorted waste objects 106. The manipulator 104 can move the waste object 106 to the intended destination by using any suitable technique e.g. throwing, blowing, moving, or placing etc the waste object 106. A controller 200 determines whether a successful gripping operation has occurred in dependence of a signal received from a sensor on the suction gripper 120 e.g. the first and second pressure sensors 408, 410 (as discussed in reference to Figures 4 below.) In some examples, a successful gripping operation is determined when the controller determines that a maximum vacuum pressure in the suction gripper is achieved.

If the suction gripper 120 fails to grip and move the waste object 106 to the intended destination then this is an unsuccessful gripping operation. An unsuccessful gripping operation can include failing to lift the waste object 106 off the conveyor belt 110 or dropping the waste object 106 before moving the waste object 106 to the chute 114. In this case the controller 200 receives a signal that there is no vacuum pressure or vacuum pressure has been lost too soon during a gripping operation.

The % gripping rate R of the gripping operations is calculated as follows: $R = \frac{{g}_{s}}{{g}_{s} + {g}_{f}} \times 100$ where gₛ is the number of successful gripping operations, g_{f} is the number of failed gripping operations and gₛ + *g_{f} is* the total number of gripping operations.

Whilst clogging of the suction gripper 120 is likely to decrease the actual picking success rate, the % gripping rate R may not reflect the picking success rate. Since R is a derivative of the first pressure sensor 408, the result of a clog could indicate that:
1) the % gripping rate R is 100% because the first pressure sensor 408 detects gripping the clogged object;
2) none of the pick attempts are successful and the % gripping rate R is 0%;
3) or the % gripping rate R is between 0% to 100%.

**In** this way the % gripping rate R is not a measure of the true picking success rate, but an indication of the operational performance of the waste sorting robot 100. The % gripping rate R will be a reliable indicator of the picking success rate only when there is no interference such as objects stuck in the suction gripper 120.

Clogging of the suction gripper 120 is likely to decrease the actual pick success rate of the waste sorting robot 100. However the % gripping rate R which is derived from the first pressure sensor 408 of the suction gripper 120 may not show the decrease in actual pick success rate. Accordingly, one or more other operational parameters are used to infer operational performance of the waste sorting robot 100 in addition to the % gripping rate R.

**In** some examples, the controller 200 comprises a statistical module 250 configured to compute statistical information relating to one or more parameters of the waste sorting robot 100, the suction gripper 120 and the operation thereof. Similar to the controller 200, the statistical module 250 may be implemented on hardware, firmware or software operating on one or more processors or computers. A single processor can operate the different functionalities or separate individual processors, or separate groups of processors can operate each functionality. The statistical module 250 as shown in Figure 2 is part of the controller 200, although in other examples, the statistical module 250 can be a separate remote processor (not shown).

**In** some examples, the controller 200 determines whether a picking operation comprises a successful gripping operation or not. **In** some examples, the controller 200 determines the nature of the gripping operation based on received sensor information. This will be discussed in more detail below. **In** other examples, the controller 200 receives information relating to the nature of the gripping operation from another source e.g. another controller (not shown) or from an operator.

The controller 200 is connected to a first pressure sensor 408 (as shown in Figure 4) via a communication line 218. The first pressure sensor 408 is arranged to detect the vacuum pressure in the suction cup 220 and the suction tube 400. Accordingly, if the suction gripper 120 fails to successfully grip the waste object 106, the first pressure sensor 408 will send pressure measurement information to the controller 200 indicating that there is no or insufficient vacuum pressure in the suction cup 220. This indicates that the suction cup 220 has not achieved making a seal against the surface of the waste object 106. This means that the suction gripper 120 is not able to grip, lift and move the waste object 106.

The controller 200 can receive pressure measurement information from the first pressure sensor 408 that there is no or insufficient vacuum pressure in the suction cup 220 whilst the manipulator 104 is moving or about to move. **In** this case, the controller 200 can determine that the waste object 106 was not lifted off the conveyor belt 110 or the waste object 106 fell off the suction gripper 120 during a gripping operation. **In** some examples, the controller 200 sends information relating to the nature of the gripping operation to the statistical module 250. **In** some examples, the statistical module 250 determines the % gripping rate R of the gripping operations.

The waste sorting robot 100 will now be described in reference to Figure 2. Figure 2 shows a schematic front view of the waste sorting robot 100. The suction gripper 120 comprises a suction cup 220 for physically engaging with a surface of the waste object 106.

The suction gripper 120 is in fluid communication with a pneumatic system 222. The pneumatic system 222 comprises at least a first air hose 202 for connecting the suction gripper 120 to a compressed air supply. For the purposes of clarity, only the first air hose 202 is shown in Figure 2 connecting the suction gripper 120 to the compressed air supply but there can be any number of air hoses connected between the suction gripper 120 and the compressed air supply. For example, there can optionally be at least a second air hose connecting the suction gripper 120 to the compressed air supply. **In** this way, a second source of air is provided to the suction gripper 120 for operating a blow tube 402 (discussed in reference to Figure 4 below).

**In** some examples, the first air hose 202 can be connected to a plurality of downstream air hoses (not shown) for supplying compressed air to a plurality of pneumatic components in the pneumatic system 222. For example, the first air hose 202 is a single, unitary air hose mounted on the manipulator 104. By providing only the first air hose 202 which is mounted on the manipulator 104 to the suction gripper 120, installation and maintenance of the waste sorting robot 100 can be simplified. The first air hose 202 is flexible and mounted to the gantry frame 102 and / or the manipulator 104. The first air hose 202 is sufficiently flexible to move and flex so as to change shape as the manipulator 104 moves without impeding the movement of the manipulator 104.

The pneumatic system 222 comprises an air compressor 206 for generating a source of compressed air. Optionally, the pneumatic system 222 can also comprise an air storage tank (not shown) for compressed air. Furthermore, the pneumatic system 222 can also comprise one or more pneumatic valves 204 for selectively providing air to the suction gripper 120. **In** this way, the pneumatic system 222 comprises air supply such as air compressor 206 in fluid connection to the suction gripper 120 configured to generate an airflow along an airflow path between the air supply e.g. the air compressor 206 and the suction gripper 120. **In** other examples, the air supply can be provided by any suitable source of compressed air or compressed gas.

The pneumatic system 222 is schematically shown as being located within the first cabinet 112. However, in other examples the pneumatic system 222 can be partially or wholly located remote from the waste sorting robot 100. For example, there may be a plurality of waste sorting robots 100 on a sorting line (not shown) each of which require a source of air. **In** this way, a single air compressor 206 can be connected to a plurality of waste sorting robots 100 via a plurality of air hoses. Accordingly, the pneumatic system 222 may be located between waste sorting robots 100.

Operation of the pneumatic system 222 is controlled by the controller 200. The controller 200 is connected via pneumatic control lines 208, 210 to the pneumatic system 222, the air compressor 206 and the pneumatic valve 204. The controller 200 is configured to send control instructions to the pneumatic system 222, the air compressor 206, and the pneumatic valve 204. This means that the controller 200 can selectively operate e.g. the air compressor 206 or the pneumatic valve 204 to deliver a supply of air to the suction gripper 120.

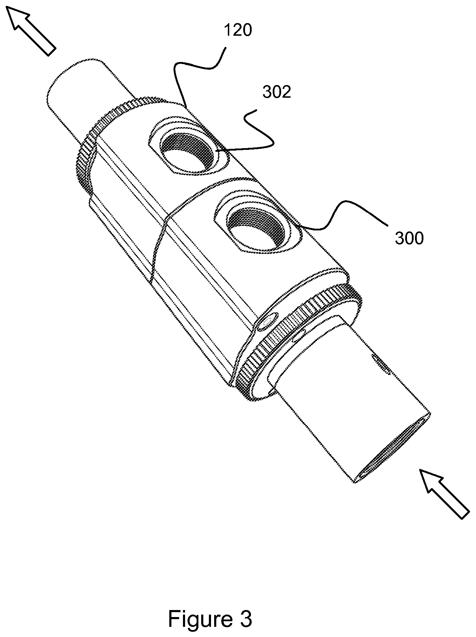

An example of the suction gripper 120 will now be discussed in reference to Figures 3 and 4. Figure 3 shows a perspective view of the suction gripper 120 without the suction cup 220. Figure 4 shows a cross-sectional side view of the suction gripper 120. As mentioned previously, the suction gripper 120 comprises a suction cup 220 (as shown in Figure 4). The suction cup 220 as shown in Figure 4 has a cup shape e.g. an approximate hemispherical shape. However, other known suction cups can be used instead e.g. a ribbed cylindrical suction cup.

The suction gripper 120 as shown in Figure 4 comprises an integrated suction tube 400 and blow tube 402 for carrying out grip / pick operations and throwing operations. This is known and will not be discussed in any further detail.

The suction gripper 120 comprises a suction tube air supply inlet 300 which is in fluid communication with the first air hose 202 (not shown in Figure 3). The suction tube air supply inlet 300 introduces a fast, high pressure source of air into the suction tube 400 which creates a vacuum pressure in the suction tube 400 represented by the arrows in Figure 3. The vacuum pressure is also created in the suction cup 220 since the suction cup 220 is in fluid communication with the suction tube 400.

As shown in Figure 4, the suction gripper 120 also comprises a blow or "sneezing" tube 402 connected to the suction tube 400. The blow tube 402 is essentially the same as the suction tube 400 but reversed in orientation to generate a positive air pressure rather than a negative air pressure (e.g. a vacuum pressure).

Similar to the suction tube 400, the blow tube 402 comprises a blow tube air supply inlet 302 which is in fluid communication with the first air hose 202. Accordingly, the blow tube air supply inlet 302 introduces a second air supply into the suction gripper 120.

In some examples the first air hose 202 is coupled between the air compressor 206 and a pneumatic valve 204. In some examples the pneumatic valve 204 which is a three-way valve. The three-way valve is configured for selectively providing an air flow to either the suction tube 400 or the blow tube 402.

In some examples, the suction tube 400 comprises a first opening 404 to receive a first pressure sensor 408 to measure the vacuum pressure in the suction gripper 120. In some examples, the first pressure sensor 408 is configured to detect the maximum vacuum pressure *p_{v max}* in the suction gripper 120.

Likewise, the blow tube 402 comprises a second opening 406 to receive a second pressure sensor 410 to measure the positive pressure when the suction gripper 120 operates in a blow mode. The first and second pressure sensors 408, 410 are connected to the controller 200 and send signals to the controller 200. Only the communication line 218 between the first pressure sensor 408 and the controller 200 is shown for the purposes of clarity in Figure 2.

The first pressure sensor 408 is configured to measure the pressure in the suction tube 400 and the suction cup 220. In some examples, the controller 200 can receive pressure measurement information from the first pressure sensor 408. The controller 200 is configured to determine the maximum vacuum pressure *p_{v max}* of the suction tube 400.

The vacuum pressure *pᵥ* of the suction tube 400 defined as follows: ${p}_{v} = {p}_{atm} - {p}_{abs}$

Wherein *pₐₜₘ* is the atmospheric pressure and *p_{abs}* is the absolute pressure in the suction gripper 120. Absolute pressure is the pressure in the suction gripper 120 measured in respect to a hard vacuum (e.g. a pressure of 0 bar).

In this way, the maximum vacuum pressure *p*_{*v* max} of the suction tube 400 is the greatest difference between atmospheric pressure and the absolute pressure of the suction tube 400. In other words, this measures the ability of the pneumatic system 222 to create a partial vacuum in the suction tube 400. The maximum vacuum pressure *p_{v max}* of the suction gripper 120 is an important parameter of the suction gripper 120 because it relates to the maximum gripping force of the suction gripper 120. For example, maximum vacuum pressure *p_{v max}* of the suction gripper 120 relates to the maximum weight of the waste object 106 that can be lifted by the suction gripper 120. The maximum vacuum pressure *p_{v max}* of the suction gripper 120 also relates to the combined maximum acceleration and weight of the waste object 106 that can be lifted by the suction gripper 120. The maximum vacuum pressure *p*_{*v* max} is also important because not every gripping operation will achieve the maximum vacuum pressure *p_{v max}.* For example, the waste object 106 can have an irregular shape and surface texture so a good seal may not be possible in every gripping operation. Accordingly, the suction gripper 120 may need to generate a certain maximum vacuum pressure p_{v max} to pick the waste object 106 with an imperfect seal between the suction gripper 120 and the waste object 106.

**In addition,** the second pressure sensor 410 sends pressure information to the controller 200. This means that the controller 200 can determine the positive sneeze pressure *p_{sneeze}* of the blow tube 402.

The pneumatic system 222 also comprises an air supply pressure sensor 224. The air supply pressure sensor 224 is connected to the controller 200 via a communication line 226. The air supply pressure sensor 224 is configured to measure the pressure of the compressed air supply to the suction gripper 120. In some examples the air supply pressure sensor 224 is mounted in the first cabinet 112. In some other examples, the air supply pressure sensor 224 is mounted on the suction tube 400, for example mounted at the suction tube air supply inlet 300 of the suction tube 400. In some other examples, the air supply pressure sensor 224 is mounted on the first air hose 202, for example a gauge (not shown). In this way, the air supply pressure sensor 224 sends pressure information to the controller 200. The controller 200 is configured to determine the minimum pressure *p_{as min}* of the air supplied to the suction gripper 120.

The minimum air supply pressure *p_{as min}* is an important parameter of the suction gripper 120 because it relates to whether suction gripper 120 is operational for a specified gripping performance.

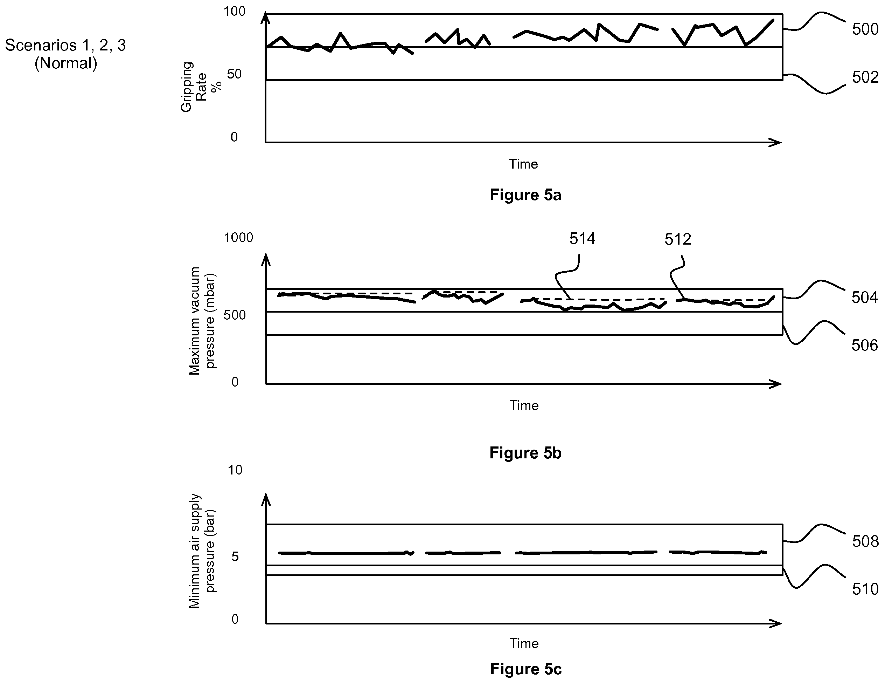

Turning to Figures 5a, 5b, 5c, operation of the waste sorting robot 100 will be discussed in further detail. Figures 5a, 5b, 5c show graphs of different parameters of the waste sorting robot 100 normal operational scenarios.

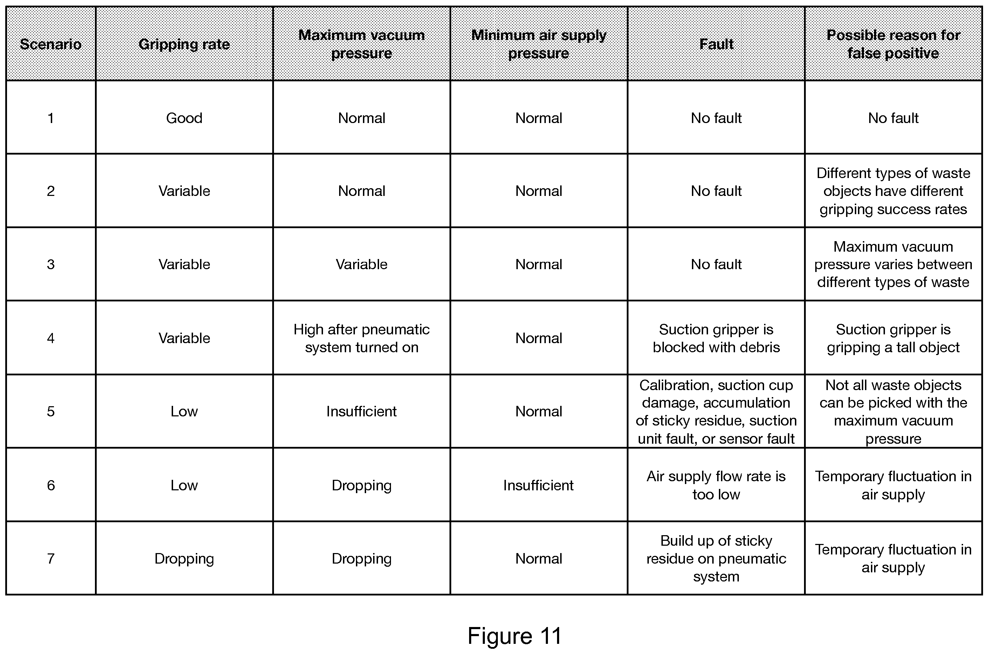

Figures 5a, 5b, 5c show normal operation of the waste sorting robot 100. This is referred to as "scenario 1" in the table in Figure 11. Figure 11 shows a table of different scenarios with different operational parameters of the waste sorting robot 100. Figure 5a shows a graph of the % gripping rate R of gripping operations over time, Figure 5b shows a graph of the maximum vacuum pressure *p*_{*v* max} (mbar) over time, and Figure 5c shows a graph of the minimum air supply pressure *p_{as min}* (bar) over time.

Figures 5a, 5b, 5c show a series of four picking operations over time. The different series of four picking operations are separated indicating that there is a period of time between the series of picking operations where the waste sorting robot 100 was not in operation.

As shown in Figure 5a, in normal operation the % gripping rate R of the gripping operations is generally above a predetermined threshold. The normal R range 500 is shown by a rectangle which represents a % gripping rate R of between 75% to 100%. **In** some examples, the normal R range 500 of the % gripping rate R can be varied to any other suitable ranges or combination thereof e.g. between 85% to 100%, 90% to 100%, 95% to 100% etc.

A below normal R range 502 is shown by rectangle which represents a % gripping rate R of between 50% to 75%. **In** some examples, if the gripping rate R of the gripping operations remains in or lower than the below normal R range 502, then the statistical module 250 sends a signal to the controller 200. This can indicate a fault with the waste sorting robot 100 or the suction gripper 120 and the controller 200 can generate an alert to the operator. **In** some examples, the below normal R range 502 of the % gripping rate R can be varied to any other suitable ranges or combination thereof e.g. between 60% to 85%, 65% to 90%, 70% to 95% etc.

The % gripping rate R is determined as previously mentioned. As can be seen from Figure 5a, there is some variation in the % gripping rate R of the gripping operations. The variation in the % gripping rate R of the gripping operations is referred to as "scenario 2" in Figure 11. The variation in the % gripping rate R of the gripping operations is because different types of waste objects 106 have different % gripping rates R. For example, some types of waste objects 106 are easier to successfully pick than other types of waste objects 106. **In** this way, the % gripping rate R of the gripping operations can be lowered temporarily due to external factors such as the type of waste being sorted, but nevertheless, the waste sorting robot 100 and the suction gripper 120 are operating normally.

Since there is inherent variability in the % gripping rate R of the gripping operations during normal operations, a moving % gripping rate R of the gripping operations (rather than a cumulative % gripping rate) is more indicative of whether there is a fault with the waste sorting robot 100 and / or the suction gripper 120. The moving % gripping rate R of the gripping operations is calculated as previously discussed. This means that the % gripping rate R of the gripping operations is calculated based on a number n of the most recent gripping operations. **In** some examples, the moving % gripping rate R is reset every time the waste sorting robot 100 is turned on.

**In** some examples, the statistical module 250 determines the moving % gripping rate R of the gripping operations. The statistical module 250 determines the moving % gripping rate R of the gripping operations over a predetermined number n of previous operations. **In** some examples, the statistical module 250 is configured to determine the moving % gripping rate R of the gripping operations over the previous n 10, 50, 100, 200, 500, or 1000 suction gripper **operations.** In some examples, the statistical module 250 is configured to determine the moving % gripping rate R of the gripping operations over any number of previous gripping operations.

The number n of previous gripping operations can be varied depending on the required sensitivity for detecting changes in R. However, the fewer the number n of suction gripper operations used to calculate R, the more likely R is to be affected by false positives. In contrast, the greater the number n of suction gripper operations used to calculate R, the more accurate R. However, with a greater number n of suction gripper operations used to calculate R, the slower R will change when the waste sorting robot 100 malfunctions. In some examples, the controller 200 sends a signal to the statistical module 250 to change the number *n in* order to increase the accuracy of R or decrease n to increase the sensitivity of R.

Figure 5b shows the maximum vacuum pressure *p*_{*v* max} over time. Figure 5b shows the maximum vacuum pressure *p_{v max}* as the instantaneous maximum vacuum pressure detected in the suction gripper 120 represented by thick line 512.

At the same time, for n consecutive suction gripper operations, the statistical module 250 records the highest maximum vacuum pressure *p*_{*v* max} which is referred to as *p_{v high_max}.* hereinafter.

By measuring maximum vacuum pressure *p_{v max}* and highest maximum vacuum pressure *p_{v high_max}* operational parameters of the waste sorting robot 100 can easily be determined from the first pressure sensor 408. These operational parameters can easily indicate the performance of the waste sorting robot 100 without detecting that a pick has been successful i.e. the waste object 106 has been placed or thrown into a chute.

In other less preferred examples, the maximum vacuum pressure *p*_{*v* max} calculated by the statistical module 250 is a maximum vacuum pressure moving average *p̅_{v max}.* However, the maximum vacuum pressure moving average *p̅*_{*v* max} is less preferred because this statistical analysis cannot distinguish between gripping operations where a high vacuum is generated in the suction gripper 120 and gripping operations where a low vacuum is generated in the suction gripper 120. In some examples, the maximum vacuum pressure moving average *p̅*_{*v* ma} can provide some indication of the operational performance of the waste sorting robot 100. However, this is less useful because maximum vacuum pressure moving average *p̅_{v ma}* does not generate instant feedback or filter out gripping operations where a low vacuum was generated.

The highest maximum vacuum pressure *p*_{*v high*_max}. is plotted on Figure 5b as a dotted thin line 514. As can be seen in Figure 5b, the highest maximum vacuum pressure *p_{v high_max}* is a straight line corresponding to the most recent highest maximum vacuum pressure *p_{v hight_max}.* The number n of the consecutive gripping operations over which the highest maximum vacuum pressure *p_{v high_max}* is calculated will determine how quickly the highest maximum vacuum pressure *p_{v high_max}* changes.

**In** some examples, the statistical module 250 determines the highest maximum vacuum pressure *p_{v high_max}.* **In** some examples, the controller 200 sends a signal to the statistical module 250 to change the number n in order to increase the accuracy of *p_{v high_max}* or decrease *n* to increase the sensitivity of *p*_{*v high_*max} *.*

As shown in Figure 5b, in normal operation the instantaneous maximum vacuum pressure *p*_{*v* max} is generally above a predetermined threshold. The predetermined threshold of the maximum vacuum pressure *p_{v max}* is an operational specification maximum vacuum pressure *p_{v max_spec}* of the waste sorting robot 100. That is, the designed maximum vacuum pressure *p*_{*v* max} for the waste sorting robot 100. As shown in Figure 5b, the predetermined threshold is represented as a range 504 which reflects an operational tolerance in the variability of the maximum vacuum pressure *p*_{*v* max} during operation. **In** some examples, the predetermined threshold can be represented on the graph in Figure 5b as a straight line 514 representing the specification maximum vacuum pressure *p_{v max__spec}* without any operational tolerance. Figure 5b shows four separate waste sorting operations and each has a highest maximum vacuum pressure *p*_{*v high*_max} within a normal range *p_{v high_max}* range 504.

The normal *p*_{*v high*_max} range 504 is shown by a rectangle which represents a range between 600 to 800 mbar. A below normal *p_{v high_max}* range 506 of the is shown by rectangle which represents 500 to 600 mbar. During normal operations as shown in scenario 1, the highest maximum vacuum pressure *p_{v high_max}* lies within the normal *p_{v high_max}* range 504. **In** some examples, the normal *p_{v high_max}* range 504 can be varied to any other suitable ranges or combination thereof e.g. between 650 to 850 mbar, 700 to 900 mbar, 800 to 950 mbar. **In** some examples, the below normal *p_{v high_max}* range 506 can be varied to any other suitable ranges or combination thereof e.g. between 550 to 550 mbar, 600 to 700 mbar, 700 to 850 mbar etc.

In some examples, if the highest maximum vacuum pressure *p_{v high_max}* remains in or lower than the below normal *p*_{*v high_*max} range 506, then the statistical module 250 optionally sends a signal to the controller 200. This can indicate a fault with the waste sorting robot 100 or the suction gripper 120 and the controller 200 can generate an alert to the operator. Use of the below normal *p*_{*v high_*max} range 506 is optional and in other examples, the statistical module 250 sends a signal to the controller 200 when the highest maximum vacuum pressure *p*_{*v high*_max} falls below and indicates a fault with the suction gripper 120 and / or the waste sorting robot 100.

Similar to % gripping rate R of the gripping operations, there is also some variation in the highest maximum vacuum pressure *p_{v high_max}.* The variation of the highest maximum vacuum pressure *p_{v high_max}* is referred to as "scenario 3" in Figure 11. The variation in the highest maximum vacuum pressure *p*_{*v high*_max} is because different types of waste objects 106 have different properties. For example, the suction gripper 120 can make good seals against smooth surfaces but not against rough or crumpled surfaces.

The statistical module 250 is configured to compare the maximum vacuum pressure *p_{v max},* highest maximum vacuum pressure *p_{v high_max},* and the specification maximum vacuum pressure *p_{v max_spec}.* If the statistical module 250 determines that the highest maximum vacuum pressure *p_{v high_max}* is lower than the specification maximum vacuum pressure *p_{v max__spec}* then, the statistical module 250 may determine that there were no "good" e.g. no suitable grippable objects. Due to the inherent variability of waste objects, some waste objects are good for gripping and some waste objects are bad for gripping. For example, a good waste object for gripping may be hard, smooth, and / or solid surface against which a high vacuum can be generated in the suction gripper 120. For example, a bad waste object for gripping may be porous, rough and / or flexible against which a low vacuum can only be generated in the suction gripper 120.

By using the highest maximum vacuum pressure *p_{v high_max}* to assess the operational performance of waste sorting robot 100, it is possible to assess whether there is a fault with the waste sorting robot 100 rather than variability in the type of waste objects 106. For example, if the highest maximum vacuum pressure *p*_{*v high_*max} remains high e.g. close to the specification maximum vacuum pressure *p_{v max_spec}* but a lower % gripping rate R, then there is a degree of confidence that the is not a problem with the waste sorting robot 100. Nevertheless, a gradual degradation in operational performance will be shown as a downward slope for the highest maximum vacuum pressure *p_{v high_max}.* At some point, the highest maximum vacuum pressure *p*_{*v high*_max} will not be high enough for the suction gripper 120 to **generate** a high enough vacuum pressure to grip even the "good" waste objects. In other words, a decreasing highest maximum vacuum pressure *p_{v high_max}* indicates that there is probably a problem with the waste sorting robot 100.

Alternatively, the statistical module 250 may determine that the waste sorting robot 100 e.g. the suction gripper 120 is unable to achieve a specified performance. As the statistical module 250 analysis the parameters of the suction gripper 120 and the waste sorting robot 100 over a greater number n of operations, the parameters determined by the statistical module 250 become more reliable metrics of performance of the waste sorting robot 100.

In some examples, the statistical module 250 is configured to compare the maximum vacuum pressure *p*_{*v* max} and the highest maximum vacuum pressure *p_{v high_max}.* The determined difference between the maximum vacuum pressure *p_{v max}* and the highest maximum vacuum pressure *p_{v high_max}* can be an indicator of the operational performance of the waste sorting robot 100. In particular, if the difference between maximum vacuum pressure *p_{v max}* and the highest maximum vacuum pressure *p_{v high_max}* is increasing, then this is an indicator that the performance of the suction gripper 100 is worsening. This can be an indication that there is a fault in the suction gripper 120.

Similarly, a falling highest maximum vacuum pressure *p_{v high_max}* can also be an indication that there is a fault in the suction gripper 120.

Figure 5c shows the minimum air supply pressure *p_{as min}* over time. In some examples, the minimum air supply pressure *p_{as min}* is the instantaneous air supply pressure detected in the suction gripper 120, the first air hose 202 or another component in the pneumatic system 222 suppling the compressed air to the suction gripper 120. In other examples, the minimum air supply pressure *p_{as min}* is a minimum air supply pressure moving average p̅_{as min}. The minimum air supply pressure moving average p̅_{as min} over the previous n gripping operations is calculated as follows: ${\overline{p}}_{as min} = \frac{1}{n} {\sum }_{i = 1}^{n} {p}_{as min}^{i}$

**In** some examples, the statistical module 250 determines the minimum air supply pressure moving average *p̅_{as min}.* In some examples, the controller 200 sends a signal to the statistical module 250 to change the number n in order to increase the accuracy of p̅_{as min} or decrease n to increase the sensitivity of *p̅_{as min}.*

**In some** other examples, instead of determining the minimum air supply pressure moving average *p̅_{as min}* the statistical module 250 determines the lowest minimum air supply pressure *p̅*_{*as* low_}*ₘᵢₙ.* The statistical module 250, determines the lowest minimum air supply pressure *p_{as ow_min}.* for n consecutive suction gripper operations. **In** some examples, the lowest minimum air supply pressure *p_{as low_min}* is used instead of minimum air supply pressure moving average *p̅_{as min}.* This is because the lowest minimum air supply pressure *p_{as low_min}* may change more rapidly during operation and changes in the air supply pressure may be easier to detect. By analyzing e.g. 10, 100 or 1000 gripping operations, the natural variation in the waste objects can be reliably filtered out.

As can be seen from Figure 5c, in normal operation there is limited variation in the instantaneous minimum air supply pressure *p_{as min}.* For the purposes of clarity, the minimum air supply pressure moving average *p̅_{as min}* has not been plotted on Figure 5c.

**In** normal operation the instantaneous minimum air supply pressure *p_{as min}* is generally above a predetermined threshold. **In** normal operation the minimum air supply pressure moving average *p̅_{as min}* is above a predetermined threshold. The normal p̅_{as min} range 508 is shown by rectangle which represents a range between 5 to 7 bar. A below normal *p̅_{as min}* range 510 is shown by rectangle which represents 4 to 5 bar. **In** some examples, if the minimum air supply pressure moving average *p̅_{as min}* remains in or lower than the below normal *p̅_{as min}* range 510, then then the statistical module 250 sends a signal to the controller 200. This can indicate a fault with the waste sorting robot 100 or the suction gripper 120 and the controller 200 can generate an alert to the operator. **In** some examples, the normal p̅_{as min} range 508 can be varied to any other suitable ranges or combination thereof e.g. between 6 to 8 bar, 7 to 9 bar, 8 to 10 bar. **In** some examples, the below normal *p̅_{as min}* range 510 can be varied to any other suitable ranges or combination thereof e.g. between 5 to 6 bar, 5 to 7 bar, 6 to 8 bar etc.

Use of the below normal *p̅_{as min}* range 510 is optional and in other examples, the statistical module 250 sends a signal to the controller 200 when the minimum air supply pressure moving average *p̅_{as min}* falls below and indicates a fault with the suction gripper 120 and / or the waste sorting robot 100.

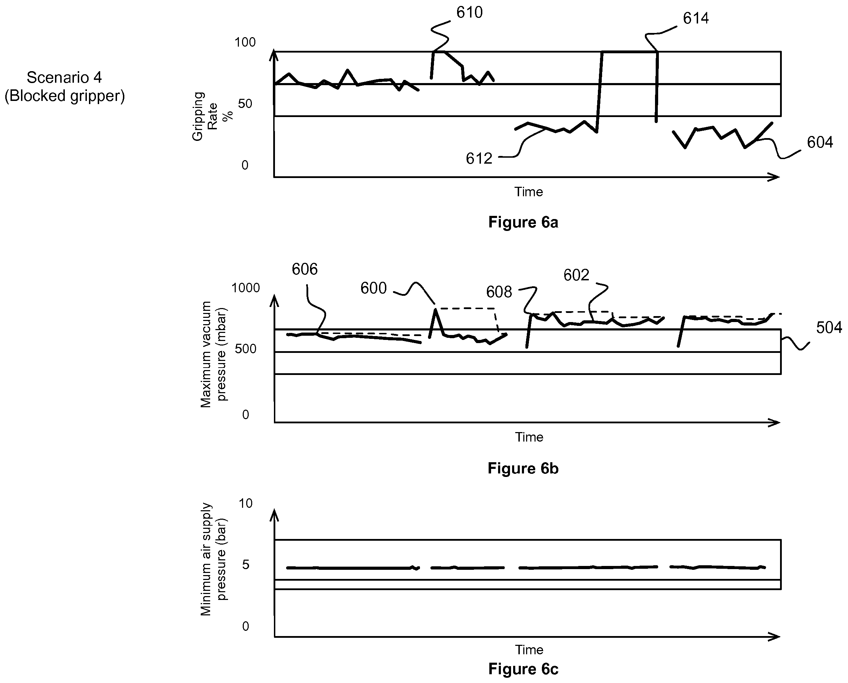

Turning to Figures 6a, 6b, 6c another scenario will now be discussed. Figures 6a, 6b, 6c show graphs of different parameters of the waste sorting robot 100 in according scenario 4 as shown in Figure 11.

Occasionally during operation, the suction gripper 120 will become blocked. When the suction gripper 120 becomes blocked, the instantaneous maximum vacuum pressure *p_{v max}* (shown as thick line 606) will increase when the suction gripper 120 is turned on. In some circumstances, the maximum vacuum pressure *p_{v max}* may increase and the % gripping rate R increases to 100% as shown in peak 610 in Figure 6a.

In some circumstances this can be because the suction gripper 120 is gripping a very tall waste object 106 on the conveyor belt 110. This means that the suction gripper 120 is already against the waste object 106 when the suction gripper 120 is turned on. However, this is not a fault in the suction gripper 120, but rather suction gripper 120 is randomly to be next to a very tall waste object 106. The spike 600 in the instantaneous maximum vacuum pressure *p*_{*v* max} can be seen in Figure 6b. However, this spike 600 is temporary once the waste object 106 is sorted into the chute 114 or is moved by the conveyor belt 110. Indeed, at the same time, the highest maximum vacuum pressure *p_{v high_max},* shown as thin dotted line 608), increases to a level above normal *p*_{*v high_*max} range 504.

In some other circumstances, the suction gripper 120 becomes blocked with debris. This can have the effect of decreasing the % gripping rate R e.g. as shown at curve 612 in Figure 6a. Alternatively this can have the effect of increasing the % gripping rate *R* to 100% e.g. as shown at curve 614 in Figure 6a. If the % gripping rate R appears to have risen to 100% then this can indicate that the suction gripper 120 is blocked when the statistical module 250 analyses the performance of the suction gripper 120 uses other operational parameters of the suction gripper 120 in addition to the % gripping rate R.

For example, the suction gripper 120 can become clogged when a filter in the suction gripper 120 becomes blocked or an object is lodged in the suction gripper 120. In this case, the highest maximum vacuum pressure *p_{v high_max}* increases as shown by the raised curve 602 because every subsequent gripping operation has a high instantaneous maximum vacuum pressure *p_{v max}.*

Since the suction gripper 120 is blocked, the suction gripper 120 cannot effectively lift the waste object 106. The suction gripper 120 then fails to successfully grip the waste object 106. The failure is likely because the suction cup 220 cannot even lift the waste object 106.

Whilst clogging of the suction gripper 120 is likely to decrease the actual picking success rate e.g. as shown by position 612 in Figure 6a, the % gripping rate R may not reflect this. Since **R is a derivative** of the first pressure sensor 408, the result of a clog could indicate that the % gripping rate R is 100% e.g. as shown at position 614 in Figure 6a because the first pressure sensor 408 detects gripping the clogged object. If the suction gripper 120 is clogged, but the first pressure sensor 408 detects that the % gripping rate R is 100% then none of the pick attempts are successful.

In this way the % gripping rate R is not a measure of the true picking success rate, but an indication of the operational performance of the waste sorting robot 100 and the suction gripper 120. The % gripping rate R will be a reliable indicator of the picking success rate only when there is no interference such as objects stuck in the suction gripper 120. In the example shown in Figure 6a, t the % gripping rate R of the gripping operations will decrease as shown by curve 604 or 612 in Figure 6a.

The minimum air supply pressure moving average *p̅_{as min}* remains constant even though the suction gripper 120 is blocked because the air supply to the suction gripper 120 is still functional.

**It** is highly unlikely that the suction gripper 120 will pick tall objects on successive gripping operations (e.g. for twenty successive gripping operations). Therefore, the statistical module 250 can determine the highest maximum vacuum pressure *p_{v high_max},* over a series of successive gripping operations and determine if there is an adverse change in the functionality of the waste sorting robot 100 or the suction gripper 120. In some examples, as discussed above, the statistical module 250 is configured to compare the maximum vacuum pressure *p*_{*v* max}, highest maximum vacuum pressure *p_{v high_max}* and the specification maximum vacuum pressure *p*_{*v* max_}*_{spec}.* The statistical module 250 determines that the maximum vacuum pressure *p*_{*v* max} and / or the highest maximum vacuum pressure *p_{v high_max}* exceeds the specification maximum vacuum pressure *p_{v max_spec}.* for a large number of successive gripping operations e.g. 10, 20 etc. Accordingly, the statistical module 250 determines that the suction gripper 120 is not operating normally. The statistical module 250 may further determine that there is a suspiciously high % gripping rate R for a consecutive number of gripping operations. The statistical module 250 and the controller 200 can then determine that there is a fault with the suction gripper 120.

By determining the % gripping rate R of suction gripper operations over a plurality of suction gripper operations and determining one or more parameters of the suction gripper 120 over a plurality of suction gripper operations, the statistical module 250 and the controller 200 are able to better identify faults with the suction gripper 120 and the waste sorting robot 100.

Accordingly, less false alarms indicating a fault with the suction gripper 120 or waste sorting robot 100 are raised by the controller 200.

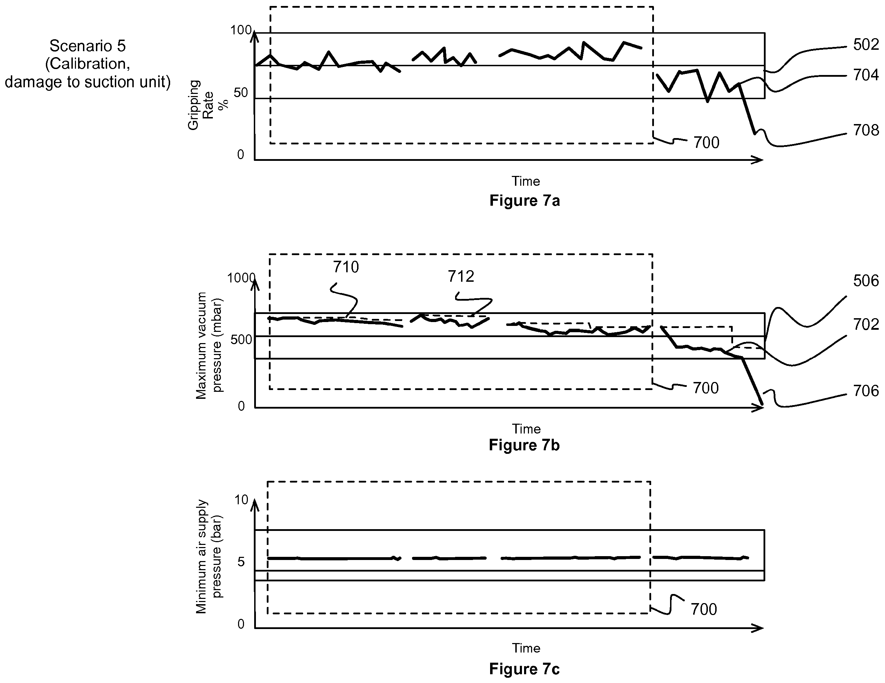

Turning to Figures 7a, 7b, 7c another scenario will now be discussed. Figures 7a, 7b, 7c show graphs of different parameters of the waste sorting robot 100 in according scenario 5 as shown in Figure 11.

Another problem with the suction gripper 120 is that the instantaneous maximum vacuum pressure p_{v max} becomes insufficient to perform desired picking operations. The instantaneous maximum vacuum pressure *p*_{*v* max} is represented by a thick line 710. The highest maximum vacuum pressure *p*_{*v high_*max} is represented by a thin dotted line 712. Dotted box labelled 700 shows the suction gripper 120 and the waste sorting robot 100 operating normally. A fault occurs outside the box 700 as discussed below.

The waste sorting robot 100 and suction gripper 120 are designed to certain site technical specifications. This means that the suction gripper 120 is designed to lift a maximum weight of waste object 106 corresponding to the instantaneous maximum vacuum pressure *p_{v max}.* Alternatively, a suction gripper 120 is designed to create a required lifting force. However, due to the variation in the types the waste object 106 it is possible that a waste object 106 is too big or too heavy to be successfully gripped by the suction gripper 120. This is due to an "edge case" in the form, shape, weight, orientation, material or other characteristic of the waste object 106 being outside the scope of the technical specification of the waste sorting robot 100 rather than a malfunction of the waste sorting robot 100. For example, the waste object which the waste sorting robot 100 attempted to grip was not a "good" object and was not suitable to be gripped. Alternatively, the waste object may be tangled with other objects or gripped from a point where lifting the object twists the waste object loose from the grip of the suction gripper 120 (e.g. gripping a bottle from its neck). Accordingly, occasionally individual picking operations will be unsuccessful because the suction gripper 120 performs an unsuccessful gripping operation on an "edge case" waste object 106. However, the instantaneous maximum vacuum pressure *p*_{*v* max} is only insufficient for an individual gripping operation. Instead, the highest maximum vacuum pressure *p_{v high_max}* will remain within the normal *p_{v high_max}* range 504.

However, under other circumstances the highest maximum vacuum pressure *p_{v high_ma}* becomes insufficient. In other words, the suction gripper 120 cannot achieve the highest maximum vacuum pressure p_{v high_max} required to successfully grip most waste objects 106 e.g. when compared with normal operation. This can occur to do several faults including:
- The suction gripper 120 calibration is invalid;
- The suction cup 220 is damaged;
- The suction gripper 120 and / or other parts of the pneumatic system 222 have accumulated sticky debris in their inner surfaces;
- The air supply at the suction tube air supply inlet 300 of the suction tube 400 is insufficient;
- The first pressure sensor 408 or other sensors are not functioning properly.

In this case, the highest maximum vacuum pressure *p_{v high_max}* drops into or lower than the below normal *p*_{*v high_*max} range 506 as shown by curve 702 and at the same time the % gripping rate R of the gripping operations will decrease as shown by curve 704 into or lower than the below normal R range 502. The period over which highest maximum vacuum pressure *p_{v high_max}* drops will depend on *n,* the number of consecutive gripping operations. As shown in Figure 7b, the highest maximum vacuum pressure *p*_{*v high_*max} is dropping.

In some extreme circumstances such as damage occurring to the suction cup 220, then the instantaneous maximum vacuum pressure *p*_{*v* max} will suffer a sharp drop. In this case, the highest maximum vacuum pressure *p_{v high_max}* and the % gripping rate R of the gripping operations will quickly decrease indicating that the suction gripper 120 and the waste sorting robot 100 have had a major failure. This is represented by curves 706 and 708 in Figures 7a and 7b.

The minimum air supply pressure moving average p̅_{as min} remains constant indicating that the air supply to the suction gripper 120 is functioning normally.

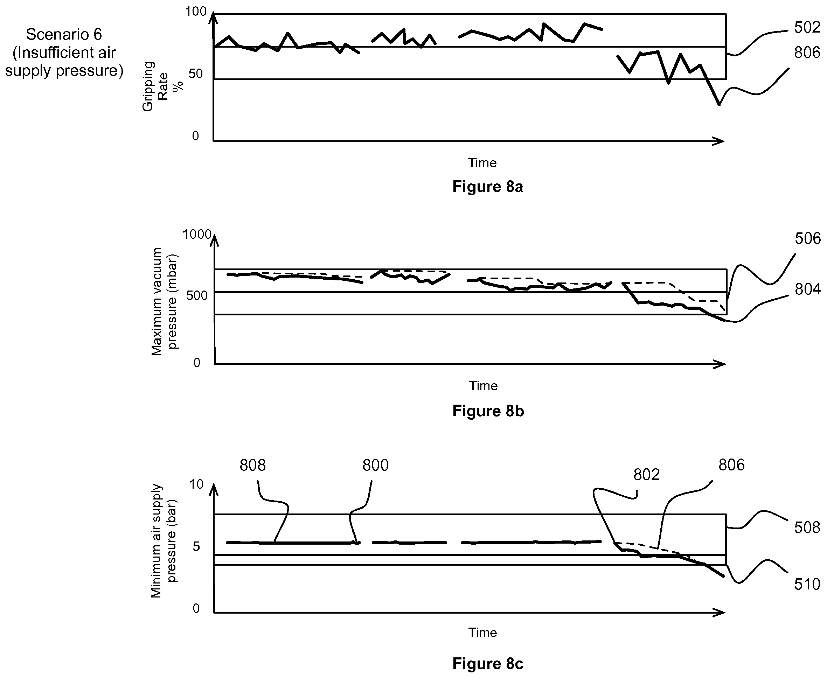

Turning to Figures 8a, 8b, 8c another scenario will now be discussed. Figures 8a, 8b, 8c show graphs of different parameters of the waste sorting robot 100 in according scenario 6 as shown in Figure 11.

Another possible problem with the suction gripper 120 is that the minimum air supply pressure is insufficient *p̅_{as min}* to perform desired picking operations. If the minimum air supply pressure is too low, then the suction gripper 120 will not be operating within the performance requirements.

In some circumstances, there will be temporary fluctuations in the air supply from the air compressor 206. For example, a small fluctuation 800 is shown in the instantaneous minimum air supply pressure *p_{as min}* (shown as thick line 808 in Figure 8c). However, the minimum air supply pressure moving average *p̅_{as min}* (shown as thin dotted line 806 in Figure 8c) remains within the normal *p̅_{as min}* range 508.

In other circumstances, the pressure (bar) or flow rate (liters/min) of air supply is insufficient for a specified gripping performance. When the suction gripper 120 is operating normally, the air supply pressure will drop which corresponds to the air supply (liters/min). However, with an insufficient air supply, the drop in the air supply pressure is short and sharp. **It** is not possible to measure this variation from a gauge in the supply line.

However, an insufficient air supply is identifiable when the minimum air supply pressure moving average *p̅_{as min}* is determined over a number of gripping operations as shown by the dropping curve 802 in Figure 8c. If there is insufficient air supply pressure, then the highest maximum vacuum pressure *p*_{*v high*_max} will decrease in to the below normal *p*_{*v high*_max} range 506 as shown by curve 804 and at the same and the % gripping rate R of the gripping operations will decrease as shown by curve 806 in to or lower than the below normal R range 502.

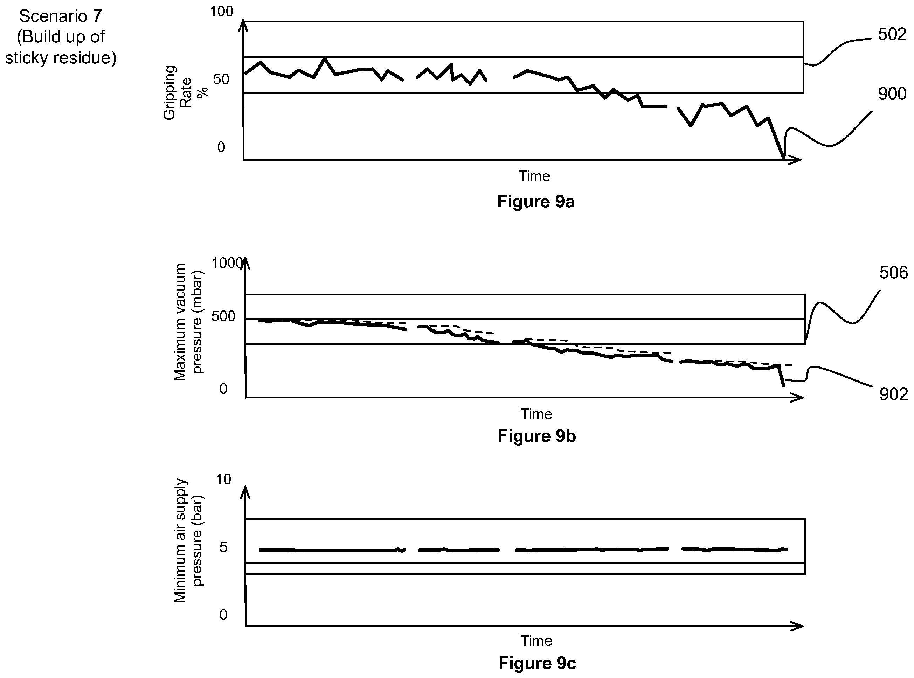

Turning to Figures 9a, 9b, 9c another scenario will now be discussed. Figures 9a, 9b, 9c show graphs of different parameters of the waste sorting robot 100 in according scenario 7 as shown in Figure 11.

Another problem that may occur during sorting waste objects 106 is that the suction gripper 120 and other components of the pneumatic system 222 acquire a buildup of dirt and sticky residue. This can be due to organic matter present on the waste object 106.

Here the highest maximum vacuum pressure *p*_{*v high*_max} will decrease into and then lower than the below normal *p*_{*v high*_max} range 506 as shown by curve 902 and at the same and the % gripping rate R of the gripping operations will decrease as shown by curve 900 into or lower than the below normal R range 502. The decrease may be gradual and not detectable over a short time period. Therefore, a long-term moving average for one or more parameters of the waste sorting robot 100 and the suction gripper 120 may optionally be required for determining that there is fault.

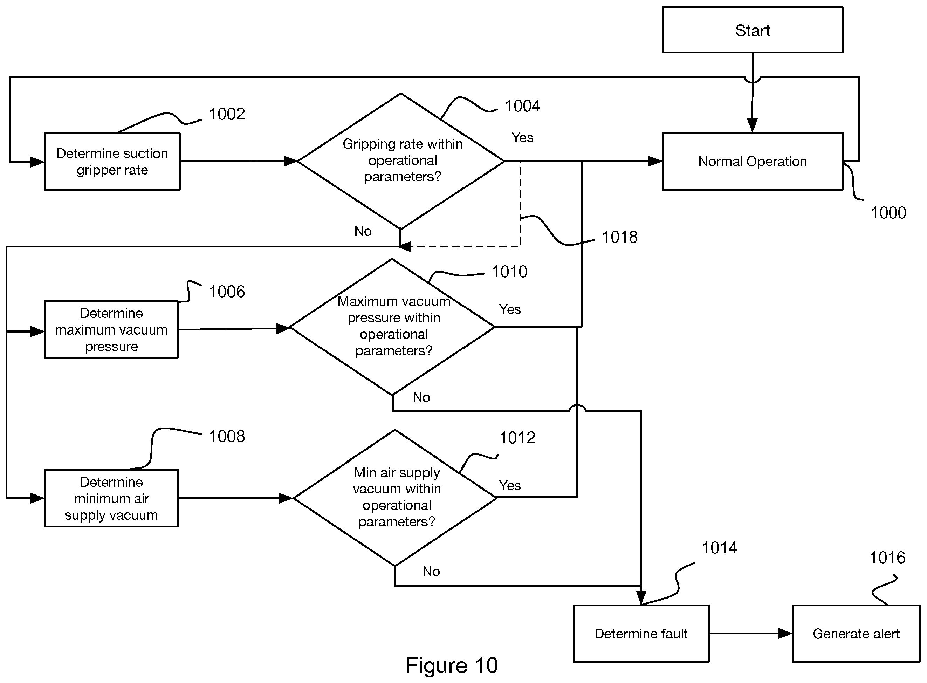

**Operation** of the controller 200 and the statistical module 250 will now be discussed in reference to Figure 10. Figure 10 shows a flow diagram of operation of the waste sorting robot 100 and fault detection.

The waste sorting robot 100 starts in a normal mode of operation as shown in step 1000. Periodically, the statistical module 250 determines the % gripping rate R of the gripping operations as shown in step 1002. Step 1002 may be carried out after every gripping operation so that the % gripping rate R is kept current. In some other examples the statistical module 250 determines the % gripping rate R of the gripping operations by sampling a number of gripping operations and extrapolating the % gripping rate R from the sample.

The statistical module 250 determines in step 1004 whether the % gripping rate R of the gripping operations is within the normal R range 500. If the statistical module 250 determines that the % gripping rate R is normal, then the controller 200 determines that the waste sorting robot 100 is operating normally and returns to step 1000. However, as discussed above, when the % gripping rate R is normal, there still may be a fault in the suction gripper 120. This means the statistical module 250 may perform steps 1006, 1008, 1010 and 1012 as discussed below. The dotted arrow 1018 indicates that the statistical module 250 performs other steps before returning to step 1000. In some examples, step 1004 is always performed before steps 1006, 1008, 1010 and 1012.

If the statistical module 250 determines that the % gripping rate R of the gripping operations is below the normal R range 500 or lower than the below normal R range 502, then the statistical module 250 determines the current instantaneous maximum vacuum pressure *p_{v max}* in step 1006 and the current instantaneous minimum air supply pressure *p_{as min}* in step 1008. In some examples, step 1004 is carried out before step 1006 and step 1008. It may be preferable for the statistical module 250 to perform step 1004 first because if the % gripping rate R is within the normal range 500, then it is likely that there are no faults with the waste sorting robot 100. However, in other examples, step 1004 can be carried out in parallel with steps 1006 and 1008.

The statistical module 250 then determines whether the highest maximum vacuum pressure *p*_{*v high_*max} is within or lower than the below normal *p_{c high_max}* range 506 as shown in step 1010. At the same time the statistical module 250 then determines whether the minimum air supply pressure moving average *p̅_{as min}* is within or lower than the below normal *p̅_{as min}* range 510 as shown in step 1012.

The controller 200 then determines in step 1014 that there is a fault in the suction gripper 120 if the % gripping rate R of the gripping operations and the highest maximum vacuum pressure *p_{v high_max}* or the minimum air supply pressure moving average *p̅_{as min}* are outside operational parameters as discussed in reference to Figures 5 to 9.

In some examples, the controller 200 optionally classifies the fault determined in 1014. For example, the controller 200 uses a predetermined table such as the one shown in Figure 11 to determine what type of fault is experienced by the waste sorting robot 100. In this way, the controller 200 uses the characteristics of the % gripping rate R of the gripping operations, the highest maximum vacuum pressure *p_{v high_max},* and the minimum air supply pressure moving average *p̅_{as min}* to identify the type of fault.

If the controller 200 determines that there is a fault, then the controller 200 issues an alert or alarm to the operator as shown in step 1016. Optionally in some examples, the controller 200 includes the probable fault in the alert. In some examples, the alert can be a message issued on a control panel (not shown). In some examples, the controller 200 can issue maintenance instructions for the suction gripper 120 and / or the waste sorting robot 100 in the alert. The issued instructions in the alert can be specific to the determined fault type.

In some examples, the statistical module 250 can determine multiple concurrent parameters for:
- % gripping rate R of the gripping operations
- highest maximum vacuum pressure *p_{v high_max}* lowest minimum air supply pressure *p_{as low_min}*

This means that the statistical module 250 can determine one or more parameters over a plurality of different baselines e.g. over a different number of gripping operations at the same time. For example, the statistical module 250 may determine the highest maximum vacuum pressure *p_{v high_max}* over a larger number e.g. 1000 to 10000 of gripping operations to detect the slow gradual drop as described in reference to scenario 7. At the same time the statistical module 250 can determine another highest maximum vacuum pressure *p_{v high_max}* over a smaller number e.g. 10 to 100 of gripping operations e.g. to rapidly identify the major failure discussed in reference to scenario 5. In this way, the statistical module 250 can monitor for different faults at the same time.

In this way partial information on how picks are actually succeeding can be used to measure the performance of the waste sorting robot 100. A signal (e.g. % gripping rate R of the gripping operations) which correlates strongly with successful picks is used to determine the performance of the waste sorting robot 100. However the signal relating to the performance of the waste sorting robot 100 is prone to faults. The inventors have realized that by applying their experience and external knowledge, the signal can be effectively used through statistical analysis for determining the performance of the waste sorting robot 100. The inventors have realized that the suction gripper 120 will achieve a good grip on at least some of the some of the objects and over time, it's virtually guaranteed that such objects will be sorted by the suction gripper 120.

In another example two or more examples are combined. Features of one example can be combined with features of other examples.

Examples of the present disclosure have been discussed with particular reference to the examples illustrated. However it will be appreciated that variations and modifications may be made to the examples described within the scope of the appended claims, which define the invention.

## Claims

1. A computer-implemented method of detecting a fault in a waste sorting robot (100) having a manipulator (104) moveable within a working area (108) and a suction gripper (120) connected to the manipulator (104) and arranged to selectively grip a waste object (106) in the working area (108), the method comprising:
determining a gripping rate (R) of suction gripper operations over a plurality of suction gripper operations in dependence of a signal received from a suction gripper sensor (408);
determining one or more other operational parameters of the suction gripper (120) over a plurality of suction gripper operations; and
detecting one or more faults with the suction gripper (120) and / or the waste sorting robot (100) based on the determined one or more other operational parameters and the determined gripping rate (R) of suction gripper operations
wherein the determining the gripping rate of the suction gripper operations comprises determining that the gripping rate of the suction gripper operations drops below a predetermined threshold;
wherein the determining one or more other operational parameters of the suction gripper comprises determining one or more pressure parameters of the suction gripper.

2. A method according to claim 1 wherein the gripping rate (R) of the suction gripper operations is determined over a plurality of successive suction gripper operations.

3. A method according to claim 2 wherein gripping rate (R) of the suction gripper operations is an average gripping rate over a predetermined number (n) of previous suction gripper operations.

4. A method according to claim 3 wherein the average gripping rate (R) of the suction gripper operations is determined over a previous 10, 50 or 100 suction gripper operations.

5. A method according to any of the preceding claims wherein the method comprises generating an alert in dependence of the detecting one or more faults.

6. A method according to any of the preceding claims wherein the method comprises determining the type of the one or more faults in dependence on the determined gripping rate (R) and the determined parameters and including the type of the one or more faults in the alert.

7. A method according to any of the preceding claims wherein the determining one or more other operational parameters of the suction gripper (120) comprises determining a maximum vacuum pressure (pv max) of the suction gripper (120),

8. A method according to claim 7 wherein the determining the maximum vacuum pressure (pv max) of the suction gripper (120) comprises determining a highest maximum vacuum pressure (pv high_max) over a predetermined number (n) of previous suction gripper operations.

9. A method according to any of the preceding claims wherein the determining one or more other operational parameters of the suction gripper (120) comprises determining that the maximum vacuum pressure (pv max) is outside a maximum vacuum pressure operating range (504).

10. A method according to any of the preceding claims wherein the determining one or more other operational parameters of the suction gripper (120) comprises determining a minimum air supply pressure (pas min) supplied to the suction gripper (120).

11. A method according to any of the preceding claims wherein the detecting the one or more faults with the suction gripper (120) and / or the waste sorting robot (100) is in dependence of a determination that the gripping rate (R) of the suction gripper operations drops below a predetermined threshold (502) and the minimum air supply pressure (pas min) and / or maximum vacuum pressure (pv max) are outside an operational range (508, 504) over a plurality of gripping operations.

12. A method according to any of the preceding claims wherein the method comprises determining that the one or more detected faults are one or more of: malfunctioning sensors (408, 410), insufficient maximum vacuum pressure (pv max), the suction gripper (120) is blocked, the suction gripper (120) is incorrectly calibrated, the suction gripper (120) is damaged, insufficient air supply pressure (pas min), and / or a build-up of material inside the material.

13. A method according to any of the preceding claims wherein the signal received from the suction gripper sensor (408) is used to determine the gripping rate (R) of suction gripper operations and determining one or more other operational parameters of the suction gripper (120).

14. A computer program product comprising instructions which, when the program is executed by a computer, cause the computer to carry out the steps of the method according to any of claims 1 to 13.

15. A waste sorting robot (100) comprising:
a manipulator (104) moveable within a working area (108) and a suction gripper (120) connected to the manipulator (104) and arranged to selectively grip a waste object (106) in the working area (108); and
a controller (200) configured to:
determine a gripping rate (R) of suction gripper operations over a plurality of suction gripper operations in dependence of a signal received from a suction gripper sensor (408);
determine one or more other operational parameters of the suction gripper (120) over a plurality of suction gripper operations; and
detect one or more faults with the suction gripper (120) and / or the waste sorting robot (100) based on the determined one or more other operational parameters and the determined gripping rate (R) of suction gripper operations
wherein the determining the gripping rate of the suction gripper operations comprises determining that the gripping rate of the suction gripper operations drops below a predetermined threshold;
wherein the determining one or more other operational parameters of the suction gripper comprises determining one or more pressure parameters of the suction gripper.

## Patentansprüche

1. Computerimplementiertes Verfahren zum Erfassen eines Fehlers in einem Abfallsortierroboter (100), der einen Manipulator (104), der innerhalb eines Arbeitsbereichs (108) bewegbar ist, und einen Sauggreifer (120) aufweist, der mit dem Manipulator (104) verbunden und eingerichtet ist, um selektiv ein Abfallobjekt (106) in dem Arbeitsbereich (108) zu greifen, wobei das Verfahren umfasst:
Bestimmen einer Greifrate (R) von Sauggreiferoperationen über eine Vielzahl von Sauggreiferoperationen in Abhängigkeit von einem Signal, das von einem Sauggreifersensor (408) empfangen wird;
Bestimmen eines oder mehrerer anderer Betriebsparameter des Sauggreifers (120) über eine Vielzahl von Sauggreiferoperationen; und
Erfassen eines oder mehrerer Fehler an dem Sauggreifer (120) und / oder dem Abfallsortierroboter (100) basierend auf dem bestimmten einen oder den bestimmten mehreren anderen Betriebsparametern und der bestimmten Greifrate (R) der Sauggreiferoperationen,
wobei das Bestimmen der Greifrate der Sauggreiferoperationen Bestimmen umfasst, dass die Greifrate der Sauggreiferoperationen unter einen vorbestimmten Schwellenwert fällt;
wobei das Bestimmen eines oder mehrerer anderer Betriebsparameter des Sauggreifers Bestimmen eines oder mehrerer Druckparameter des Sauggreifers umfasst.

2. Verfahren nach Anspruch 1, wobei die Greifrate (R) der Sauggreiferoperationen über eine Vielzahl aufeinanderfolgender Sauggreiferoperationen bestimmt wird.

3. Verfahren nach Anspruch 2, wobei die Greifrate (R) der Sauggreiferoperationen eine durchschnittliche Greifrate über eine vorbestimmte Anzahl (n) vorheriger Sauggreiferoperationen ist.

4. Verfahren nach Anspruch 3, wobei die durchschnittliche Greifrate (R) der Sauggreiferoperationen über vorherige 10, 50 oder 100 Sauggreiferoperationen bestimmt wird.

5. Verfahren nach einem der vorstehenden Ansprüche, wobei das Verfahren Erzeugen einer Warnung in Abhängigkeit vom Erfassen eines oder mehrerer Fehler umfasst.

6. Verfahren nach einem der vorstehenden Ansprüche, wobei das Verfahren Bestimmen des Typs des einen oder der mehreren Fehler in Abhängigkeit von der bestimmten Greifrate (R) und den bestimmten Parametern umfasst und den Typ des einen oder der mehreren Fehler in der Warnung beinhaltet.

7. Verfahren nach einem der vorstehenden Ansprüche, wobei das Bestimmen eines oder mehrerer anderer Betriebsparameter des Sauggreifers (120) Bestimmen eines maximalen Vakuumdrucks (pv max) des Sauggreifers (120) umfasst.

8. Verfahren nach Anspruch 7, wobei das Bestimmen des maximalen Vakuumdrucks (pv max) des Sauggreifers (120) Bestimmen eines höchsten maximalen Vakuumdrucks (pv high_max) über eine vorbestimmte Anzahl (n) vorheriger Sauggreiferoperationen umfasst.

9. Verfahren nach einem der vorstehenden Ansprüche, wobei das Bestimmen eines oder mehrerer anderer Betriebsparameter des Sauggreifers (120) Bestimmen umfasst, dass der maximale Vakuumdruck (pv max) außerhalb eines maximalen Vakuumdruck-Betriebsbereichs (504) liegt.

10. Verfahren nach einem der vorstehenden Ansprüche, wobei das Bestimmen eines oder mehrerer anderer Betriebsparameter des Sauggreifers (120) Bestimmen eines minimalen Luftversorgungsdrucks (pas min), der dem Sauggreifer (120) zugeführt wird, umfasst.

11. Verfahren nach einem der vorstehenden Ansprüche, wobei das Erfassen des einen oder der mehreren Fehler an dem Sauggreifer (120) und / oder dem Abfallsortierroboter (100) von einer Bestimmung abhängt, dass die Greifrate (R) der Sauggreiferoperationen unter einen vorbestimmten Schwellenwert (502) fällt und der minimale Luftversorgungsdruck (pas min) und / oder der maximale Vakuumdruck (pv max) über eine Vielzahl von Greifoperationen außerhalb eines Betriebsbereichs (508, 504) liegen.

12. Verfahren nach einem der vorstehenden Ansprüche, wobei das Verfahren Bestimmen umfasst, dass der eine oder die mehreren erfassten Fehler eines oder mehrere von Folgenden sind: fehlerhafte Sensoren (408, 410), unzureichender maximaler Vakuumdruck (pv max), der Sauggreifer (120) ist blockiert, der Sauggreifer (120) ist falsch kalibriert, der Sauggreifer (120) ist beschädigt, unzureichender Luftversorgungsdruck (pas min) und / oder eine Ansammlung von Material im Inneren des Materials.

13. Verfahren nach einem der vorstehenden Ansprüche, wobei das von dem Sauggreifersensor (408) empfangene Signal dazu verwendet wird, die Greifrate (R) der Sauggreiferoperationen und einen oder mehrere andere Betriebsparameter des Sauggreifers (120) zu bestimmen.

14. Computerprogrammprodukt, das Anweisungen umfasst, die, wenn das Programm von einem Computer ausgeführt wird, den Computer veranlassen, die Schritte des Verfahrens nach einem der Ansprüche 1 bis 13 auszuführen.

15. Abfallsortierroboter (100), der umfasst:
einen Manipulator (104), der innerhalb eines Arbeitsbereichs (108) bewegbar ist, und einen Sauggreifer (120), der mit dem Manipulator (104) verbunden ist und dazu eingerichtet ist, ein Abfallobjekt (106) in dem Arbeitsbereich (108) selektiv zu greifen; und
eine Steuereinheit (200), die konfiguriert ist zum:
Bestimmen einer Greifrate (R) der Sauggreiferoperationen über eine Vielzahl von Sauggreiferoperationen in Abhängigkeit von einem Signal, das von einem Sauggreifersensor (408) empfangen wird;
Bestimmen eines oder mehrerer anderer Betriebsparameter des Sauggreifers (120) über eine Vielzahl von Sauggreiferoperationen; und
Erfassen eines oder mehrerer Fehler an dem Sauggreifer (120) und / oder dem Abfallsortierroboter (100) basierend auf dem bestimmten einen oder den bestimmten mehreren anderen Betriebsparametern und der bestimmten Greifrate (R) der Sauggreiferoperationen,
wobei das Bestimmen der Greifrate der Sauggreiferoperationen Bestimmen umfasst, dass die Greifrate der Sauggreiferoperationen unter einen vorbestimmten Schwellenwert fällt;
wobei das Bestimmen eines oder mehrerer anderer Betriebsparameter des Sauggreifers Bestimmen eines oder mehrerer Druckparameter des Sauggreifers umfasst.

## Revendications

1. Procédé mis en œuvre par ordinateur de détection d'un défaut dans un robot de tri des déchets (100) présentant un manipulateur (104) mobile dans une zone de travail (108) et une pince aspirante (120) reliée au manipulateur (104) et conçue pour saisir sélectivement un déchet (106) dans la zone de travail (108), le procédé comprenant :
la détermination d'un taux de préhension (R) des opérations de la pince aspirante sur une pluralité d'opérations de préhension par aspiration en fonction d'un signal reçu d'un capteur de la pince aspirante (408) ;
la détermination d'un ou de plusieurs autres paramètres opérationnels de la pince aspirante (120) au cours d'une pluralité d'opérations de la pince aspirante ; et
la détection d'un ou de plusieurs défauts de la pince aspirante (120) et / ou du robot de tri des déchets (100) en fonction d'un ou de plusieurs autres paramètres opérationnels déterminés et du taux de préhension déterminé (R) des opérations de la pince aspirante
dans lequel la détermination du taux de préhension des opérations de la pince aspirante comprend la détermination du fait que le taux de préhension des opérations de la pince aspirante chute en dessous d'un seuil prédéterminé ;
dans lequel la détermination d'un ou de plusieurs autres paramètres opérationnels de la pince aspirante comprend la détermination d'un ou de plusieurs paramètres de pression de la pince aspirante.

2. Procédé selon la revendication 1 dans lequel le taux de préhension (R) des opérations de la pince aspirante est déterminé sur une pluralité d'opérations successives de la pince aspirante.

3. Procédé selon la revendication 2 dans lequel le taux de préhension (R) des opérations de la pince aspirante est un taux de préhension moyen sur un nombre prédéterminé (n) d'opérations précédentes de la pince aspirante.

4. Procédé selon la revendication 3 dans lequel le taux de préhension moyen (R) des opérations de la pince aspirante est déterminé sur les 10, 50 ou 100 opérations précédentes de la pince aspirante.

5. Procédé selon l'une quelconque des revendications précédentes, dans lequel le procédé comprend la génération d'une alerte en fonction de la détection d'un ou de plusieurs défauts.

6. Procédé selon l'une quelconque des revendications précédentes, dans lequel le procédé comprend la détermination du type des un ou plusieurs défauts en fonction du taux de préhension déterminé (R) et des paramètres déterminés et l'inclusion du type des un ou plusieurs défauts dans l'alerte.

7. Procédé selon l'une quelconque des revendications précédentes, dans lequel la détermination d'un ou plusieurs autres paramètres opérationnels de la pince aspirante (120) comprend la détermination d'une pression de vide maximale (pv max) de la pince aspirante (120),

8. Procédé selon la revendication 7, dans lequel la détermination de la pression de vide maximale (pv max) de la pince aspirante (120) comprend la détermination d'une pression de vide maximale la plus élevée (pv high_max) sur un nombre prédéterminé (n) d'opérations précédentes de la pince aspirante.

9. Procédé selon l'une quelconque des revendications précédentes, dans lequel la détermination d'un ou de plusieurs autres paramètres opérationnels de la pince aspirante (120) comprend la détermination que la pression de vide maximale (pv max) est en dehors d'une plage de fonctionnement de pression de vide maximale (504).

10. Procédé selon l'une quelconque des revendications précédentes, dans lequel la détermination d'un ou de plusieurs autres paramètres opérationnels de la pince aspirante (120) comprend la détermination d'une pression d'alimentation en air minimale (pas min) fournie à la pince aspirante (120).

11. Procédé selon l'une quelconque des revendications précédentes, dans lequel la détection des un ou plusieurs défauts de la pince aspirante (120) et / ou du robot de tri des déchets (100) dépend d'une détermination selon laquelle le taux de préhension (R) des opérations de la pince aspirante chute en dessous d'un seuil prédéterminé (502) et la pression d'alimentation en air minimale (pas min) et / ou la pression de vide maximale (pv max) sont en dehors d'une plage opérationnelle (508, 504) sur une pluralité d'opérations de préhension.

12. Procédé selon l'une quelconque des revendications précédentes, dans lequel le procédé comprend la détermination que les un ou plusieurs défauts détectés sont un ou plusieurs parmi : un dysfonctionnement des capteurs (408, 410), une pression de vide maximale insuffisante (pv max), le blocage de la pince aspirante (120), le mauvais étalonnage de la pince aspirante (120), l'endommagement de la pince aspirante (120), une pression d'alimentation en air insuffisante (pas min) et / ou une accumulation de matière à l'intérieur du matériel.

13. Procédé selon l'une quelconque des revendications précédentes, dans lequel le signal reçu du capteur de la pince aspirante (408) est utilisé pour déterminer le taux de préhension (R) des opérations de la pince aspirante et pour déterminer un ou plusieurs autres paramètres opérationnels de la pince aspirante (120).

14. Produit de programme informatique comprenant des instructions qui, lorsque le programme est exécuté par un ordinateur, amènent l'ordinateur à exécuter les étapes du procédé selon l'une quelconque des revendications 1 à 13.

15. Robot de tri des déchets (100) comprenant :
un manipulateur (104) mobile dans une zone de travail (108) et une pince aspirante (120) reliée au manipulateur (104) et conçue pour saisir sélectivement un déchet (106) dans la zone de travail (108) ; et
un dispositif de commande (200) configuré pour :
déterminer un taux de préhension (R) des opérations de la pince aspirante sur une pluralité d'opérations de préhension par aspiration en fonction d'un signal reçu d'un capteur de la pince aspirante (408) ;
déterminer un ou plusieurs autres paramètres opérationnels de la pince aspirante (120) au cours d'une pluralité d'opérations de la pince aspirante ; et
détecter un ou plusieurs défauts de la pince aspirante (120) et / ou du robot de tri des déchets (100) en fonction d'un ou de plusieurs autres paramètres opérationnels déterminés et du taux de préhension déterminé (R) des opérations de la pince aspirante
dans lequel la détermination du taux de préhension des opérations de la pince aspirante comprend la détermination du fait que le taux de préhension des opérations de la pince aspirante chute en dessous d'un seuil prédéterminé ;
dans lequel la détermination d'un ou de plusieurs autres paramètres opérationnels de la pince aspirante comprend la détermination d'un ou de plusieurs paramètres de pression de la pince aspirante.
